# EUROPÄISCHE PATENTSCHRIFT

(11) **EP 4 252 962 B1**
(45) Veröffentlichungstag und Bekanntmachung des Hinweises auf die Patenterteilung: **12.03.2025**
(21) Anmeldenummer: 23151093.4
(22) Anmeldetag: 11.01.2023
(51) Int. Cl.: B23Q 11/10, B23Q 17/22

(54) **VORRICHTUNG UND VERFAHREN ZUR FESTSTELLUNG EINER ANNÄHERUNG EINES WERKZEUGS AN EIN WERKSTÜCK**
DEVICE AND METHOD FOR DETECTING THE APPROACH OF A TOOL AGAINST A WORKPIECE
DISPOSITIF ET PROCÉDÉ DE DÉTECTION DE L'APPROCHE D'UN OUTIL SUR UNE PIÈCE

(30) Priorität: 29.03.2022 DE 102022203088
(43) Veröffentlichungstag der Anmeldung: 04.10.2023
(73) Patentinhaber: Dr. Johannes Heidenhain GmbH, 83301 Traunreut (DE)
(72) Erfinder: SEICHTER, Martin, 83379 Wonneberg (DE); LAHNER-PRINZ, Andreas, 84489 Burghausen (DE)

(56) Entgegenhaltungen:
- EP-A1- 3 964 903
- DE-A1- 102010 032 599
- DE-C1- 10 127 972

## Beschreibung

### GEBIET DER TECHNIK

Die vorliegende Erfindung betrifft eine Vorrichtung zur Feststellung einer Annäherung eines Werkzeugs an ein Werkstück in einer Werkzeugmaschine nach Anspruch 1, sowie ein korrespondierendes Verfahren nach Anspruch 8. Sie ist vorteilhaft einsetzbar bei numerisch gesteuerten Werkzeugmaschinen, die Werkstücke durch spanabhebende Bearbeitung formen, insbesondere durch Fräsen, Drehen und Schleifen.

### STAND DER TECHNIK

Die am weitest verbreiteten Herstellungsmethoden für mechanische Werkstücke basieren auf der spanabhebenden Bearbeitung, also auf dem Zerspanen von Material. Hierbei wird von einem sogenannten Rohteil unter Einsatz von Werkzeugen gezielt Material abgetragen, so dass schließlich ein Produkt mit gewünschter Form und Funktion entsteht. Um Material abzutragen, wird das Werkstück mit einem Werkzeug in Kontakt gebracht. Die Werkzeuge weisen geometrisch bestimmte oder unbestimmte Schneiden auf.

Beispiele für Werkzeuge mit geometrisch bestimmten Schneiden sind Fräser, Bohrer oder Drehmeißel, ein Werkzeug mit unbestimmten Schneiden ist eine Schleifscheibe. Für den Schneidprozess wird häufig eines der Objekte - Werkzeug oder Werkstück - in Rotation versetzt, bevor es mit dem anderen Objekt in Kontakt gebracht wird.

Die Bearbeitung wird von einem Computer gesteuert, der unter Abarbeitung eines Fertigungsprogrammes elektrische Antriebe ansteuert, um zumindest eines der Objekte zu bewegen. Zur Feststellung der Ist-Position des bewegten Objektes sind Positionsmessgeräte - Drehgeber oder Längenmessgeräte - vorgesehen, deren Messwerte wiederum dem Computer zugeführt sind. Der Computer wird als CNC-Steuerung, die Werkzeugmaschine zur Durchführung der Bearbeitung als CNC-Maschine bezeichnet.

Zur Erzeugung der Rotation des Objektes ist eine sog. Spindel vorgesehen. Dabei handelt es sich um einen Elektromotor, der - direkt oder indirekt - eine Welle antreibt, an der wiederum das Objekt befestigt ist. Hier ist ein Drehgeber vorgesehen, um Drehwinkel und/oder Drehzahl der Spindel zu messen. Weiter sind Messeinrichtungen bekannt, mit denen Verlagerungen der Welle aus einer Ideallage messbar sind. Die EP 3 591 344 A1 beschreibt eine derartige Messeinrichtung.

Um das Werkstück zum Zwecke der Bearbeitung zu fixieren, sind Spannmittel vorgesehen. Da das Einspannen eines neuen Werkstücks (Rohteil) mit großen Toleranzen belegt ist und auch die Maße der Rohteile schwanken können, müssen vor dem Beginn der Bearbeitung die genaue Position des neu eingespannten Rohteils, sowie seine Maße bestimmt werden. Hierzu kommen sogenannte Taster zum Einsatz, die an Stelle eines Werkzeugs in Richtung des Werkstücks bewegt werden und ein Schaltsignal ausgeben, wenn sie in Kontakt mit dem Werkstück treten. Die CNC-Steuerung wertet das Schaltsignal aus und stellt Position und Maße des Werkstücks durch Anfahren mehrerer Positionen am Rohteil fest (Antasten). Erst dann kann die eigentliche Bearbeitung beginnen.

Ein Nachteil dieser Vorgehensweise ist der damit verbundene Zeitaufwand, da hierfür erst das Werkzeug gegen den Taster ausgewechselt und nach dem Messvorgang wieder zurückgewechselt werden muss.

Die DE 101 27 972 C1 beschreibt eine Vorrichtung und ein Verfahren zur Feststellung einer Annäherung eines Werkzeugs an ein Werkstück, die auf der Messung eines Staudrucks einer Druckluftversorgung basieren.

### ZUSAMMENFASSUNG DER ERFINDUNG

Es ist eine Aufgabe der vorliegenden Erfindung, eine verbesserte Vorrichtung anzugeben, mit der die Lage eines Werkstücks in einer Werkzeugmaschine bestimmbar ist.

Diese Aufgabe wird gelöst durch eine Vorrichtung nach Anspruch 1.

Es wird nun eine Vorrichtung zur Feststellung einer Annäherung eines Werkzeugs an ein Werkstück in einer Werkzeugmaschine, bei der das Werkzeug und das Werkstück relativ zueinander bewegbar sind und das Werkzeug oder das Werkstück drehfest mit einer Welle verbunden ist, vorgeschlagen, wobei das Werkzeug einen Kühlmittelkanal aufweist, durch den ein Kühlmittel einem Bearbeitungsbereich zuführbar ist, in dem die Bearbeitung des Werkstücks durch das Werkzeug stattfindet. Die Vorrichtung umfasst eine Messanordnung mit einer drehfest auf der Welle angeordneten Messteilung und wenigstens einen Positionsaufnehmer, der in Bezug auf die Welle feststehend angeordnet ist, und einen Rechner, wobei
- der wenigstens eine Positionsaufnehmer geeignet ausgestaltet ist, die Messteilung abzutasten und hieraus Positionswerte zu generieren, die eine Position der Welle angeben und
- die Positionswerte dem Rechner zugeführt sind, der Mittel umfasst, die durch Auswertung eines Verlaufs der Positionswerte bei einer Annäherung des Werkzeugs an das Werkstück feststellen, dass sich das Werkzeug bezogen auf das Werkstück in einem Annäherungsbereich befindet, in dem eine Verlagerung der Welle auftritt, die aus dem Staudruck des auf das Werkstück auftreffenden Kühlmittelstroms resultiert und mittels eines Annäherungssignals signalisieren, wenn das Werkzeug bezogen auf das Werkstück eine Annäherungsposition erreicht, bei der sich das Werkzeug nahe am Werkstück befindet, ohne dieses zu berühren.

Weiter ist es eine Aufgabe der vorliegenden Erfindung, ein verbessertes Verfahren anzugeben, mit dem die Lage eines Werkstücks in einer Werkzeugmaschine bestimmt werden kann.

Diese Aufgabe wird gelöst durch ein Verfahren nach Anspruch 8.

Es wird nun ein Verfahren zur Feststellung einer Annäherung eines Werkzeugs an ein Werkstück in einer Werkzeugmaschine, bei der das Werkzeug und das Werkstück relativ zueinander bewegbar sind und das Werkzeug oder das Werkstück drehfest mit einer Welle verbunden ist, vorgeschlagen, wobei das Werkzeug einen Kühlmittelkanal aufweist, durch den ein Kühlmittel einem Bearbeitungsbereich zuführbar ist, in dem die Bearbeitung des Werkstücks durch das Werkzeug stattfindet. Die Werkzeugmaschine umfasst eine Messanordnung mit einer drehfest auf der Welle angeordneten Messteilung und wenigstens einen Positionsaufnehmer, der in Bezug auf die Welle feststehend angeordnet ist, und einen Rechner, wobei gemäß dem Verfahren
- die Messteilung von dem wenigstens einen Positionsaufnehmer abgetastet wird und hieraus Positionswerte generiert werden, die eine Position der Welle angeben und
- die Positionswerte dem Rechner zugeführt werden, der Mittel umfasst, mit denen durch Auswertung eines Verlaufs der Positionswerte bei einer Annäherung des Werkzeugs an das Werkstück festgestellt wird, dass sich das Werkzeug bezogen auf das Werkstück in einem Annäherungsbereich befindet, in dem eine Verlagerung der Welle auftritt, die aus dem Staudruck des auf das Werkstück auftreffenden Kühlmittelstroms resultiert und die Mittel mittels eines Annäherungssignals signalisieren, wenn das Werkzeug bezogen auf das Werkstück eine Annäherungsposition erreicht, bei der sich das Werkzeug nahe am Werkstück befindet, ohne dieses zu berühren.

Mit Vorteil weist die Messteilung eine Teilungsspur auf, deren Codeelemente in Umfangsrichtung der Welle angeordnet sind und durch deren Abtastung durch die Positionsaufnehmer Positionswerte gemessen werden können, die die Winkelposition der Welle angeben. In einer vorteilhaften Ausgestaltung sind drei Positionsaufnehmer zur Abtastung der Teilungsspur vorgesehen, die in Umfangsrichtung der Welle in gleichmäßigen Abständen angeordnet sind. Eine Auslenkung der Welle beeinflusst nun, je nach Richtung der Auslenkung, die von den Positionsaufnehmern gemessenen Winkelpositionen, die sich als Änderung der durch die Anordnung der Positionsaufnehmer festgelegten Winkeldifferenz auswirkt. Hieraus kann wiederum Betrag und Richtung der Auslenkung der Welle ermittelt werden.

Zusätzlich zu dieser Teilungsspur kann die Messteilung eine zweite Teilungsspur aufweisen, deren Codeelemente ringförmig um den Umfang der Welle angeordnet sind. Zu deren Abtastung können wiederum drei Positionsaufnehmer vorgesehen sein, die ebenfalls in Umfangsrichtung der Welle in gleichmäßigen Abständen angeordnet sind. Aus der Abtastung der zweiten Messteilung können Auslenkungen der Welle in deren Achsrichtung gemessen werden. Insbesondere kann eine Drehung der Achse in Achsrichtung, also bezogen auf eine Ruhelage der Welle eine Schiefstellung der Achse, gemessen werden, die sich in einer Verkippung der ringförmigen Codeelemente bezogen auf die Positionsaufnehmer auswirkt.

Die Positionswerte der Positionsaufnehmer sind im Rechner einem Verlagerungsrechner zugeführt, der kontinuierlich wenigstens einen Verlagerungswert generiert, der ein Maß für die Auslenkung der Welle, hervorgerufen durch eine auf die Welle wirkende Kraft, ist. Zur Auswertung des Verlaufs der Verlagerungswerte sind im Rechner geeignete Mittel vorgesehen. Besonders vorteilhafte Ausführungsformen ergeben sich mit folgenden Mitteln:
In einer ersten vorteilhaften Ausführungsform umfassen die Mittel einen Vergleicher, mit dem durch Vergleich von aktuell eintreffenden Verlagerungswerten mit einem Schwellenwert das Erreichen der Annäherungsposition feststellbar ist.

In einer zweiten vorteilhaften Ausführungsform umfassen die Mittel einen Differenzierer, ausgestaltet zur Bildung des Differenzenquotienten aus aufeinanderfolgend eintreffenden Verlagerungswerten und dem Zeitintervall ihres Eintreffens, sowie einen Vergleicher, mit dem durch Vergleich der Differenzenquotienten mit vorab gespeicherten Schwellenwerten das Erreichen der Annäherungsposition feststellbar ist.

In einer weiteren vorteilhaften Ausführungsform umfassen die Mittel einen Frequenzanalysator, der den Verlauf der Verlagerungswerte im Frequenzbereich auswertet. Durch gezielte Überwachung der spektralen Leistungsdichte von Frequenzbändern, die durch die Drehzahl der Welle und die Anzahl der Kühlmittelöffnungen im Werkzeug bestimmt sind, kann auf das Erreichen der Annäherungsposition geschlossen werden.

In einer Variante dieser Ausführungsform können dem Frequenzanalysator auch direkt die Positionswerte wenigstens eines Positionsaufnehmers zugeführt sein, so dass auf den Verlagerungsrechner verzichtet werden kann.

In einer weiteren vorteilhaften Ausführungsform umfassen die Mittel ein KI-Modul, das den Verlauf der Verlagerungswerte mit Methoden der künstlichen Intelligenz, insbesondere durch Mustererkennung, auswertet. Dies ist besonders vorteilhaft, wenn die Verlagerungswerte große statistische Schwankungen aufweisen.

Auch diese Ausführungsform kann dahingehend variiert werden, dass dem KI-Modul direkt die Positionswerte wenigstens eines Positionsaufnehmers zugeführt sind, so dass kein Verlagerungsrechner benötigt wird.

Um das Zusammenspiel des Rechners mit anderen Komponenten, beispielsweise einem Steuergerät der Werkzeugmaschine, zu ermöglichen, hat es sich als vorteilhaft herausgestellt, den Rechner mit einem Befehlskanal auszustatten, über den dem Rechner Befehle und ggf. Daten zuführbar sind, beispielsweise eine Startbefehl, der das erfindungsgemäße Verfahren startet.

Der Befehlskanal kann zusammen mit dem Antwortdatenkanal als digitale, mit Vorteil serielle, Schnittstelle ausgeführt sein.

Zur Bestimmung von Schwellenwerten ist mit Vorteil ein Schwellenwertbestimmer vorgesehen, der bei Annäherung des Werkzeugs an das Werkstück einen Übergang vom Annäherungsbereich zu einem Bearbeitungsbereich, in dem es zu einer spanabhebenden Bearbeitung des Werkstücks kommt, erkennt und hieraus einen Schwellenwert bestimmt. Die Bestimmung von Schwellenwerten erfolgt mit Vorteil in einem Testlauf mit einem Testwerkstück. Der Testlauf kann vom Steuergerät durch das Übermitteln eines Teststartbefehls an den Rechner gestartet werden.

Die Schwellenwerte werden mit Vorteil im Rechner gespeichert, beispielsweise im Vergleicher, dem Frequenzanalysator oder dem KI-Modul.

Weitere vorteilhafte Ausgestaltungen der erfindungsgemäßen Vorrichtung, bzw. des erfindungsgemäßen Verfahrenes, sind den jeweils abhängigen Ansprüchen zu entnehmen, sowie den nachfolgend beschriebenen Ausführungsbeispielen.

### KURZE BESCHREIBUNG DER ZEICHNUNGEN

Es zeigt
- Figur 1: eine erfindungsgemäße Vorrichtung in Verbindung mit Komponenten einer Werkzeugmaschine,
- Figur 2: ein Ausführungsbeispiel einer erfindungsgemäßen Messanordnung,
- Figur 3: eine für die Messanordnung nach Figur 2 geeignete Messteilung,
- Figur 4: eine erste Ausführungsform eines Rechners einer erfindungsgemäßen Vorrichtung,
- Figur 5: ein Signaldiagramm mit dem Verlauf der Verlagerungswerte VL in Verbindung mit dem Schwellenwert S nach Figur 4,
- Figur 6: eine weitere Ausführungsform eines Rechners einer erfindungsgemäßen Vorrichtung,
- Figur 7: ein Signaldiagramm mit dem Verlauf der Verlagerungswerte VL in Verbindung mit dem Schwellenwert S nach Figur 6,
- Figur 8: eine weitere Ausführungsform eines Rechners einer erfindungsgemäßen Vorrichtung und
- Figur 9: eine weitere Ausführungsform eines Rechners einer erfindungsgemäßen Vorrichtung.

### BESCHREIBUNG DER AUSFÜHRUNGSFORMEN

In der nachfolgenden Beschreibung von vorteilhaften Ausführungsformen der vorliegenden Erfindung werden Bezugszeichen von Komponenten und Funktionsgruppen, die in einer Figur beschrieben werden, in den nachfolgenden Figuren beibehalten.

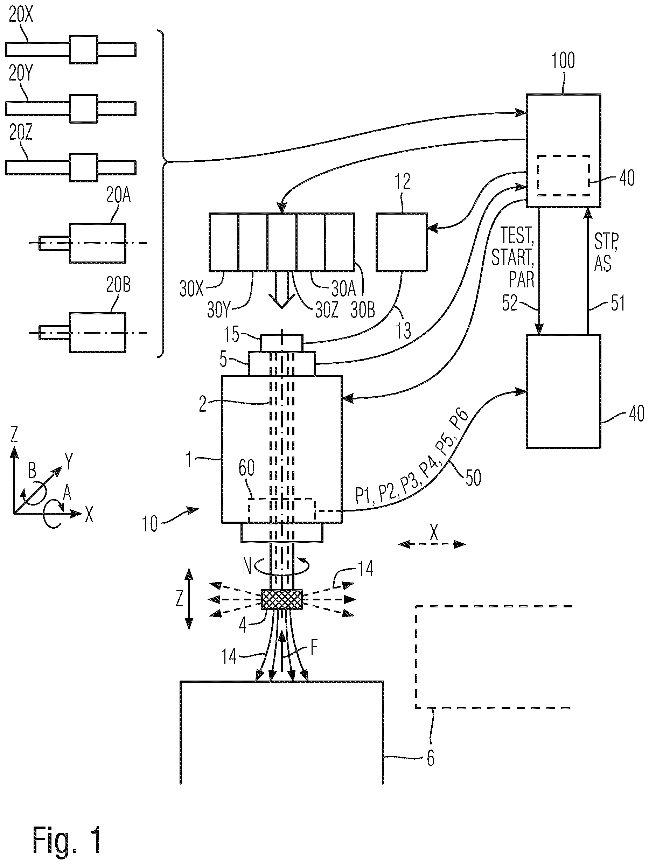

Figur 1 zeigt eine erfindungsgemäße Vorrichtung in Verbindung mit Komponenten einer Werkzeugmaschine, in diesem Fall einer 5-Achs-Fräsmaschine. Sie weist eine Motorspindel 10 auf, sowie je Bewegungsachse einen Antrieb und eine Positionsmesseinrichtung. Zur Steuerung von Bewegungsabläufen, insbesondere zur Bearbeitung eines Werkstücks 6, ist ein Steuergerät 100 vorgesehen.

Die zentrale Komponente der Motorspindel 10 ist ein Spindelmotor 1 mit einer Welle 2. An einem Ende der Welle 2 ist ein Werkzeug 4 (beispielsweise ein Fräswerkzeug) drehfest mit der Welle 2 verbunden, so dass es mit dieser rotiert. Für die Befestigung des Werkzeugs 4 an der Welle 2 ist eine (nicht dargestellte) Werkzeugaufnahme vorgesehen, beispielsweise ein Hohlschaftkegel. Ebenso mechanisch mit der Welle 2 gekoppelt ist ein Winkelmessgerät 5 (Drehgeber). Die Kopplung erfolgt über eine (nicht dargestellte) mechanische Kupplung, die eine drehbare Welle des Winkelmessgerätes 5 mit der Welle 2 verbindet. Auf diese Weise sind Winkelposition und/oder Anzahl der zurückgelegten Umdrehungen der Welle 2 mit dem Winkelmessgerät 5 messbar. Die Lagerung der Welle 2 im Gehäuse des Spindelmotors 1 erfolgt beispielsweise über Wälzlager.

Zur Bearbeitung des Werkstücks 6 wird die Welle 2 des Spindelmotors 1 in Rotation versetzt und dreht sich mit einer Drehzahl N. Zur Drehzahlregelung dient die vom Winkelmessgerät 5 gemessene Winkelposition. Das Werkzeug 4 wird durch eine Relativbewegung der Motorspindel 10 bezogen auf das Werkstück 6 mit diesem in Kontakt gebracht. So wird beispielsweise bei einer Fräsbearbeitung die gewünschte Kontur aus dem Werkstück 6 gefräst. Die Relativbewegung kann entlang linearer Antriebsachsen X, Y, Z erfolgen, zusätzlich können auch sogenannte Schwenkachsen A, B vorgesehen sein, so dass im dargestellten Beispiel eine Bewegung in fünf Bewegungsachsen X, Y, Z, A, B möglich ist. Die Bewegung der einzelnen Achsen wird über (lediglich angedeutete) Antriebe 30X, 30Y, 30Z, 30A, 30B, die wiederum entsprechende mechanische Komponenten (nicht dargestellt) antreiben, gesteuert. Zur Feststellung der Position der jeweiligen Bewegungsachsen X, Y, Z, A, B sind in der Werkzeugmaschine weitere Positionsmesseinrichtungen 20X, 20Y, 20Z, 20A, 20B vorgesehen.

Es sei an dieser Stelle explizit darauf hingewiesen, dass es sich bei der Bewegung der Achsen um Relativbewegungen handelt, es somit gleichwertig zu betrachten ist, ob ein Antrieb die Motorspindel 10 und damit das Werkzeug 4, oder das Werkstück 6 bewegt.

Ebenso sei darauf hingewiesen, dass die vorliegende Erfindung auch bei Werkzeugmaschinen anwendbar ist, bei denen nicht das Werkzeug, sondern das Werkstück drehfest mit der Welle verbunden ist und mit dieser rotiert. Typische Beispiele hierfür sind Drehmaschinen und Maschinen zur Schleifbearbeitung.

Die Motorspindel 10 ist mit einer Innenkühlungszufuhr (IKZ) ausgestattet. Hierzu ist in der Werkzeugmaschine eine Kühlmittelpumpe 12 vorgesehen, die der Motorspindel 10 über eine Kühlmittelleitung 13 ein Kühlmittel 14 zuführt. An der Welle 2 ist ein Kühlmitteleinkoppler 15 angeordnet, der das Kühlmittel 14 in einen Kühlmittelkanal 16 einleitet, der dieses durch die Welle 2 über die Werkzeugaufnahme und das Werkzeug 4 zum Bearbeitungsbereich führt. Der Bearbeitungsbereich ist der Bereich der Werkzeugmaschine, in dem die (spanabhebende) Bearbeitung des Werkstücks 6 stattfindet. Das Kühlmittel 14 wird dabei mit hohem Druck zugeführt und dient der Kühlung des Bearbeitungsbereichs, insbesondere der Schneiden des Werkzeugs 4. Je nach Bearbeitung handelt es sich bei den Schneiden um bestimmte (z.B. Fräsbearbeitung) oder unbestimmte (z.B. Schleifbearbeitung) Schneiden.

Bei Auftreffen des Kühlmittels 14 auf das Werkstück 6 bildet sich ein Staudruck, der wiederum eine Kraft F erzeugt, die auf das Werkzeug 4 und damit auf die Welle 2 der Motorspindel 10 einwirkt. Diese Kraft F ist umso größer, je näher sich das Werkzeug 4 am Werkstück 6 befindet. Ihre Richtung ist abhängig vom Winkel des Auftreffens des Kühlmittels 14 auf das Werkstück 6, von dessen Geometrie, der Drehzahl N der Welle 2, der Geometrie des Werkzeugs 4, etc. Somit kann die Kraft F sowohl Komponenten umfassen, die in Achsrichtung der Welle 2 wirken, als auch Komponenten, die senkrecht hierzu wirken.

Im dargestellten Beispiel handelt es sich bei dem Werkzeug 4 um ein im Wesentlichen zylindrisch geformtes Schleifwerkzeug, bei dem die Bearbeitung durch die Stirnseite des Werkzeugs 4 erfolgt. Dementsprechend erfolgt der Austritt des Kühlmittels 14 ebenfalls stirnseitig in Bewegungsrichtung Z auf das Werkstück 6 zu. Die vorliegende Erfindung ist aber nicht auf eine bestimmte Werkzeugart oder -geometrie eingeschränkt. So sind auch Werkzeuge mit Innenkühlungszufuhr bekannt, bei denen die Bearbeitung durch Schneiden erfolgt, die auf der Mantelfläche angeordnet sind, beispielsweise Fräswerkzeuge. Hier erfolgt der Austritt des Kühlmittels 14 über entsprechende Öffnungen (Düsen) in der Mantelfläche des Werkzeugs, wie in Figur 1 durch gestrichelte Linien angedeutet. Um in diesem Fall eine konstante Kühlmittelzufuhr zu erreichen, sind über den Umfang verteilt mehrere Kühlmittelöffnungen angeordnet, mit Vorteil jeweils eine Öffnung je Schneide des Fräsers.

Die Steuerung einer derart ausgestalteten Werkzeugmaschine erfolgt programmgesteuert von einem Steuergerät 100. Dieses umfasst einen Computer mit geeignetem Betriebssystem, auf dem entsprechende Programme ablaufen. Der Computer weist übliche Peripheriegeräte wie Monitor, Eingabegeräten, Speicher,... etc., auf. Bei dem Steuergerät 100 kann es sich um eine sog. Numerische Steuerung handeln.

Messwerte der Positionsmesseinrichtungen 20X, 20Y, 20Z, 20A, 20B und des Winkelmessgeräts 5 sind dem Steuergerät 100 über geeignete Signalübertragungskanäle zugeführt. Zur Steuerung der Antriebe 30X, 30Y, 30Z, 30A, 30B und des Spindelmotors 1 durch das Steuergerät 100 sind ebenfalls geeignete Signalübertragungskanäle vorgesehen. Die Signalübertragungskanäle können, je nach Anforderung, zur Übertragung analoger oder digitaler Signale ausgelegt sein. Insbesondere können die Signalübertragungskanäle digitale Datenschnittstellen, mit Vorteil serielle Datenschnittstellen umfassen.

Die Steuerung der Kühlmittelpumpe 12 erfolgt ebenfalls über das Steuergerät 100.

Die Werkzeugmaschine ist nun mit einer erfindungsgemäßen Vorrichtung ausgestattet, die einen Rechner 40 und eine Messanordnung 60 umfasst.

Die Messanordnung 60 ist geeignet ausgestaltet, um Verlagerungen (Auslenkungen) der Welle 2 festzustellen. Verlagerungen treten immer dann auf, wenn eine Kraft direkt oder indirekt auf die Welle 2 einwirkt, also beispielsweise während der Bearbeitung des Werkstücks 6 durch das Werkzeug 4, oder aber, wie oben beschrieben, bei Annäherung des kühlmitteldurchflossenen Werkzeugs 4 an das Werkstück 6.

Die Messanordnung 60 ist an der Welle 2 angeordnet. Verlagerungen (Auslenkungen) der Welle 2 sind dadurch feststellbar, dass durch Abtastung wenigstens einer über den Umfang der Welle 2 angeordneten und mit dieser rotierenden Messteilung mit wenigstens einem Positionsaufnehmer, der bezogen auf die Welle 2 feststehend angeordnet ist, Positionswerte generiert werden, die eine Position der Welle 2 angeben. Da Verlagerungen der Welle 2 Änderungen der Positionswerte bewirken, können durch Auswertung der generierten Positionswerte Rückschlüsse auf die Verlagerung der Welle 2 gezogen werden.

Da die Auswirkung einer Auslenkung der Welle 2 auf die Positionswerte abhängig ist von der Richtung, aus der eine Kraft auf die Welle einwirkt, ergeben sich besonders vorteilhafte Ausführungsformen der Messanordnung 60, wenn mehrere Positionsaufnehmer vorhanden sind, insbesondere zwei oder drei Positionsaufnehmer, die in Umfangsrichtung der Welle 2 versetzt angeordnet sind. Sind zwei Positionsaufnehmer vorhanden, so sind diese mit Vorteil in einem Winkelabstand von 180° angeordnet, bei drei Positionsaufnehmern ist eine gleichmäßige Verteilung über den Umfang der Welle 2, also ein Winkelabstand von jeweils 120° zwischen den Positionsaufnehmern, besonders vorteilhaft.

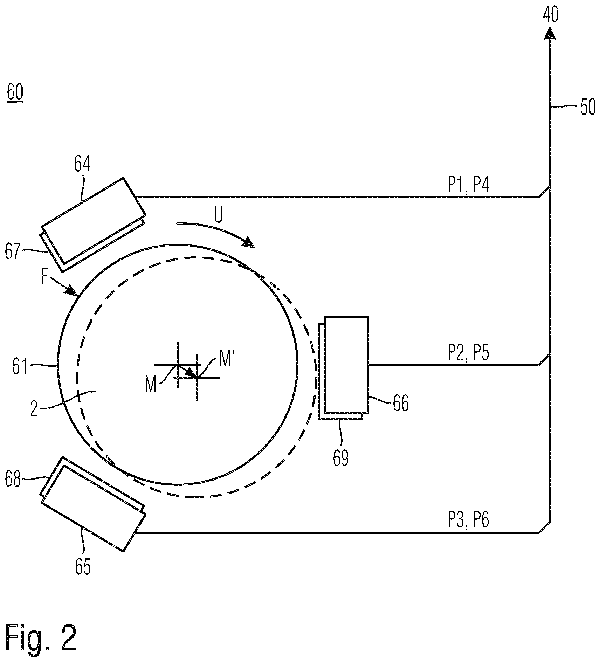

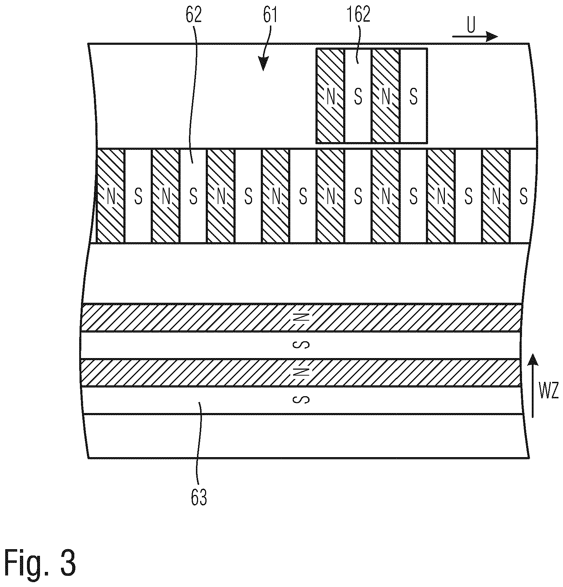

Eine geeignete Ausführungsform einer Messanordnung wird im weiteren Verlauf anhand der Figuren 2 und 3 beschrieben.

Bei der Messanordnung 60 kann es sich um eine aus der EP 3 591 344 A1 bekannte Messanordnung handeln, auf die hier explizit Bezug genommen wird.

Im vorliegenden Beispiel wird von einer Messanordnung 60 ausgegangen, die sechs Positionsaufnehmer aufweist, die Positionswerte P1, P2, P3, P4, P5, P6 generieren.

Die Positionswerte P1, P2, P3, P4 P5, P6 der Messanordnung 60 sind über einen Signalübertragungskanal 50 zur Auswertung dem Rechner 40 zugeführt. Es sei darauf hingewiesen, dass im Rahmen dieses Dokumentes unter der Bezeichnung "Positionswert" jede Art von Signal zu verstehen ist, das eine Position der Welle 2 repräsentiert. Es kann sich bei Positionswerten somit um analoge oder digitale Signale handeln. Die Verarbeitung der Positionswerte im Rechner 40 erfolgt in jedem Fall digital. Wo die Digitalisierung, bzw. Konvertierung in digitale Datenwörter erfolgt (bereits in den Positionsaufnehmern, oder erst im Rechner), ist dabei unerheblich. Somit kann die Übertragung der Positionswerte P1, P2, P3, P4 P5, P6 zum Rechner analog oder digital erfolgen. Besonders vorteilhaft ist es, wenn die Positionsaufnehmer bereits digitale Positionswerte P1, P2, P3, P4 P5, P6 generieren und die Übertragung dieser digitalen Datenworte über digitale Schnittstellen, insbesondere serielle Schnittstellen erfolgt.

Der Rechner 40 umfasst Mittel, die durch Auswertung des Verlaufs der Positionswerte P1, P2, P3, P4 P5, P6, die von der Messanordnung 60 eintreffen, Verlagerungen der Welle 2 feststellen und bezüglich einer Annäherung des Werkzeugs 4 an das Werkstück 6 bewerten. Das Ergebnis der Bewertung wird durch ein Annäherungssignal AS signalisiert, das beispielsweise über einen Ausgangsdatenkanal 51 an das Steuergerät 100 ausgegeben wird.

Mit Vorteil sind Funktionen des Rechners 40 steuerbar, beispielsweise durch Befehle, die über einen Befehlskanal 52 von einer externen Einheit, in diesem Fall vom Steuergerät 100, eintreffen. Im vorliegenden Beispiel kann die Funktion des Rechners 40 durch einen Startbefehl START gestartet werden. Darüber hinaus kann vorgesehen sein, dem Rechner 40 über den Befehlskanal 52 Parameter PAR zuzuführen, die er zum Auswerten der Positionswerte P1, P2, P3, P4 P5, P6 benötigt, beispielsweise die Drehzahl der Welle 2, Parameter der Innenkühlungszufuhr, die Vorschubgeschwindigkeit der Motorspindel 10, oder Informationen über das Werkzeug 4 (Art, Durchmesser, Anzahl der Schneiden, ...).

Der Rechner 40 kann, wie dargestellt, ein eigenständiges Gerät sein, er kann aber auch als ein Modul, das innerhalb des Steuergerätes 100 angeordnet ist, ausgeführt sein (gestrichelt gezeichnet). Funktionsmodule, die die Funktionen des Rechners 40 ausführen, können, teilweise oder vollständig, durch ein Computerprogramm realisiert sein, beispielsweise lauffähig auf einem Computer (PC), der vom Steuergerät 100 oder vom Rechner 40 selbst umfasst ist. Dies gilt für alle Ausführungsbeispiele von Rechnern, die in diesem Dokument beschrieben sind.

Der Ausgangsdatenkanal 51 und der Befehlskanal 52 können gemeinsam als eine bidirektionale Schnittstelle, mit Vorteil als serielle Schnittstelle, ausgebildet sein.

Figur 2 zeigt ein Ausführungsbeispiel einer Messanordnung 60. Sie umfasst eine Messteilung 61 mit zwei Teilungsspuren, sowie insgesamt sechs Positionsaufnehmer 64, 65, 66, 67, 68, 69.

Die Messteilung 61 ist drehfest auf der Welle 2 angeordnet, so dass sie mit dieser rotiert. Dabei können Codeelemente, die die Messteilung 61 bilden, direkt auf der Welle 2 angeordnet sein, beispielsweise durch Magnetisierung, wenn ein magnetisches Abtastprinzip verwendet wird, oder durch Bildung von reflektierenden und nicht-reflektierenden Bereichen bei einem optischen Abtastprinzip. Alternativ kann die Messteilung 61 auf einem Teilungsträger angeordnet sein, der wiederum drehfest mit der Welle 2 verbunden ist.

Figur 3 zeigt eine geeignete Messteilung 61 mit zwei Teilungsspuren 62, 63. Dabei dient die erste Teilungsspur 62 zum einen der Winkelmessung, also der Feststellung des Drehwinkels der Welle 2, und zum andern der Feststellung einer Verlagerung der Welle 2 senkrecht zur Achsrichtung. Dies entspricht einer Verlagerung der Messteilung 61 in der in Figur 2 dargestellten Zeichenebene. Die zweite Teilungsspur 62 dient dagegen zur Feststellung von Verlagerungen der Welle 2 in Achsrichtung.

Die Codeelemente der ersten Teilungsspur 62 sind in Umfangsrichtung U der Welle 2 hintereinander angeordnet. Im dargestellten Beispiel ist die erste Teilungsspur 62 als inkrementelle Teilungsspur ausgeführt und weist insbesondere ein magnetisches Abtastprinzip auf, d.h. die Teilungsspur besteht aus einer regelmäßigen Abfolge von magnetischen Plus- und Minuspolen, die in Umfangsrichtung U der Welle 2 angeordnet sind. Die Messteilung 61 kann zusätzlich eine Referenzspur 162 aufweisen, mit der an einer definierten Winkelposition durch eine kurze Abfolge von magnetischen Plus- und Minuspolen (Referenzmarke) eine Referenzposition für die prinzipbedingt relative Winkelmessung der inkrementellen Teilungsspur festgelegt wird. Auf diese Weise wird eine absolute Winkelmessung ermöglicht. Anstelle der Referenzspur 162 kann die Referenzmarke in der Teilungsspur 62 integriert sein.

Alternativ kann die erste Teilungsspur 62 auch digital codiert sein, so dass auch ohne Referenzspur 162 jederzeit eine absolute Winkelmessung möglich ist. Besonders vorteilhaft ist es, wenn die Codeelemente der ersten Teilungsspur 62 in Form einer sequentiellen Pseudozufallsfolge (Pseudo Random Code, PRC) angeordnet sind.

Die Codeelemente der zweiten Teilungsspur 63 sind ringförmig um den Umfang der Welle 2 angeordnet. Die Messung der Position, bzw. von Positionsänderungen dieser Codeelemente erlaubt sowohl Rückschlüsse über Verlagerungen der Welle 2 in deren Achsrichtung WZ, als auch über Drehungen der Welle 2 quer zur Achsrichtung (Verkippungen aus der in Figur 2 dargestellten Zeichenebene heraus).

Im Ausführungsbeispiel in Figur 2 ist eine erste Gruppe von Positionsaufnehmern 64, 65, 66 zur Abtastung der Teilungsspur 62 und ggf. der Referenzspur 162, sowie eine zweite Gruppe von Positionsaufnehmern 67, 68, 69 zur Abtastung der zweiten Teilungsspur 63 vorgesehen. Die Positionsaufnehmer der beiden Gruppen sind jeweils in regelmäßigen Winkelabständen in Umfangsrichtung der Welle 2 angeordnet, d.h. in einem Winkelabstand von 120°.

Durch Abtastung der Teilungspur 62 mit den Positionsaufnehmern 64, 65, 66 ist die Winkelposition der Welle 2 messbar. Wirkt nun eine Kraft F auf die Welle 2, so wird diese ausgelenkt, d.h. der Drehmittelpunkt M verschiebt sich (in Figur 2 ist der verschobene Drehmittelpunkt mit M' bezeichnet). Wie durch den gestrichelt gezeichneten Kreis angedeutet, verschiebt sich mit der Welle 2 auch die Messteilung 61. Dies wirkt sich auf die Winkelmessung der ersten Gruppe von Positionsaufnehmern 64, 65, 66 aus, so dass durch Auswertung des Verlaufs der Positionswerte P1, P2, P3 einzelner Positionsaufnehmer 64, 65, 66 oder/und Änderung der Winkeldifferenz zwischen den Positionswerten P1, P2, P3 der Positionsaufnehmer 64, 65, 66 Rückschlüsse auf den Betrag und ggf. die Richtung der auf die Welle 2 einwirkenden Kraft F gezogen werden können.

Bewirkt nun die Kraft F neben der Verschiebung der Welle 2 (und damit der Teilungsspur 62) senkrecht zur Achsrichtung (messbar mit der ersten Gruppe von Positionsaufnehmern 64, 65, 66 durch Abtastung der Teilungsspur 62) auch noch eine Verkippung der Welle 2, also eine Drehung quer zur Achsrichtung, so ist diese mit der zweiten Gruppe von Positionsaufnehmern 67, 68, 69 durch Abtastung der zweiten Teilungsspur 63 messbar.

Die gezeigte Anordnung der zweiten Gruppe von Positionsaufnehmern 67, 68, 69 zur Abtastung der zweiten Teilungsspur 162 wird als besonders vorteilhaft angesehen, da durch die Auswertung der drei Positionswerte P4, P5, P6 reine Bewegungen der Welle 2 in Achsrichtung WZ und Verkippungen der Welle 2 eindeutig unterscheidbar und somit getrennt voneinander auswertbar sind. Sollen beispielsweise ausschließlich Bewegungen (Verlagerungen) der Welle 2 in Achsrichtung WZ erfasst werden, so ist hierfür bereits einer der Positionsaufnehmer 67, 68, 69, angeordnet an einer beliebigen Stelle des Umfangs, ausreichend.

Häufig bewirken Kräfte F, die auf die Welle 2 einwirken, sowohl Verlagerungen senkrecht zur Achsrichtung, nachweisbar mit der ersten Gruppe von Positionsaufnehmern 64, 65, 66, als auch Verkippungen (Drehungen des in Figur 2 dargestellten Kreises aus der Zeichenblattebene), nachweisbar mit der zweiten Gruppe von Positionsaufnehmern 67, 68, 69. Die Verarbeitung der von den sechs Positionsaufnehmern 64, 65, 66, 67, 68, 69 gemessenen Positionswerte P1, P2, P3, P4, P5, P6 erlaubt somit eine umfassende Bestimmung von komplexen Verlagerungen der Welle 2, die durch Einwirken einer Kraft F auf die Welle 2 bewirkt werden.

Die von den Positionsaufnehmern 64, 65, 66, 67, 68, 69 generierten Positionswerte P1, P2, P3, P4, P5, P6 sind zur Auswertung über den Signalübertragungskanal 50 dem Rechner 40 zuführbar.

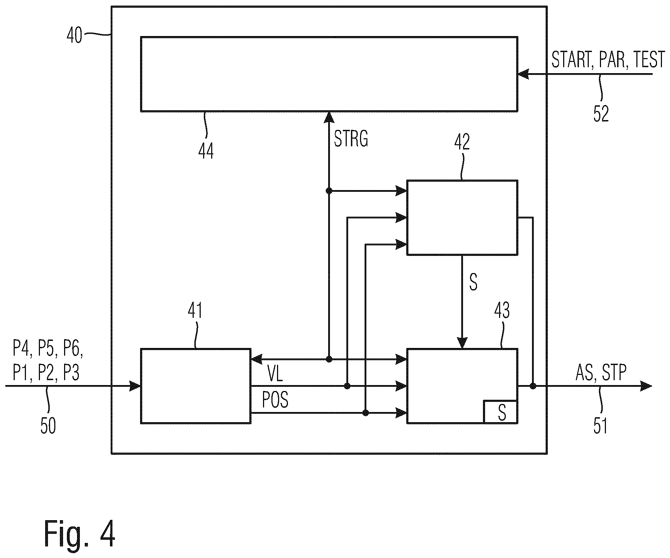

Figur 4 zeigt eine Ausführungsform eines Rechners 40. Der Rechner 40 umfasst einen Verlagerungsrechner 41, einen Vergleicher 43 und eine Ablaufsteuerung 44.

Der Verlagerungsrechner 41 ist geeignet ausgestaltet, um im laufenden Betrieb kontinuierlich aus den eintreffenden Positionswerten P1, P2, P3, P4, P5, P6 Verlagerungswerte VL zu bestimmen, die den Betrag der Auslenkung der Welle 2 aus einer Ruhelage angeben, und sie an den Vergleicher 43 auszugeben. Mit Vorteil erfolgt die Bildung der Verlagerungswerte VL in konstanten Zeitabständen. Diese sind so gewählt, dass je Umdrehung der Welle 2 wenigstens ein Verlagerungswert VL generiert wird, beispielsweise durch Bildung eines Mittelwertes der Verlagerung der Welle 2 innerhalb einer Umdrehung.

Der Generierung der Verlagerungswerte VL kann, wie oben bereits erwähnt, die Auswertung des Verlaufs einzelner Positionswerte P1, P2, P3, P4, P5, P6 oder/und die Auswertung der Differenz der Positionswerte P1, P2, P3, P4, P5, P6 mehrerer Positionsaufnehmer 64, 65, 66, 67, 68, 69 zugrunde liegen.

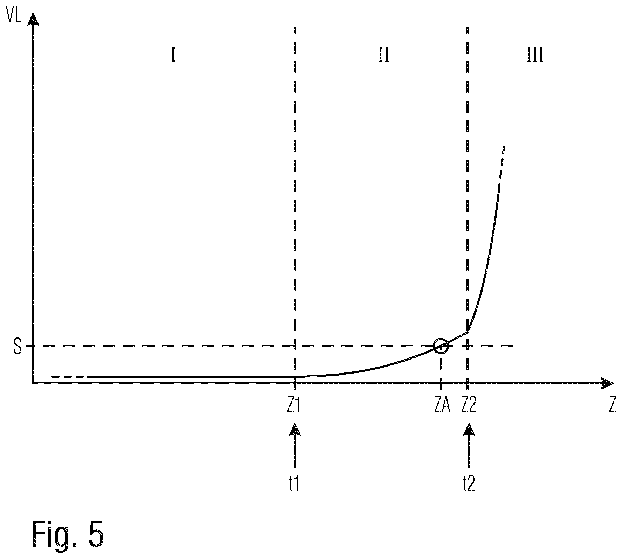

Ein möglicher Verlauf der Verlagerungswerte VL ist in Figur 5 dargestellt. Es handelt sich dabei um einen idealisierten Verlauf, bei dem rotationsabhängige Schwankungen der Auslenkung der Welle 2 nicht berücksichtigt sind. Ein derartiger Verlauf kommt beispielsweise zustande, wenn entsprechend Figur 1 die Motorspindel 10 mit dem Werkzeug 4 in der Bewegungsrichtung Z bei aktiver Kühlmittelzufuhr mit einer konstanten Vorschubgeschwindigkeit auf das Werkstück 6 zu bewegt wird. Die Ermittlung der Verlagerungswerte VL basiert in diesem Fall auf den von der zweiten Gruppe von Positionsaufnehmern 67, 68, 69 gemessenen Positionswerten P4, P5, P6, da die Kraft F in Achsrichtung WZ wirkt.

Erfolgt die Annäherung in der in Figur 1 angedeuteten Bewegungsrichtung X, so kann die Ermittlung der Verlagerungswerte VL dagegen auf der Auswertung der von der ersten Gruppe von Positionsaufnehmern 64, 65, 66 gemessenen Positionswerte P1, P2, P3 basieren, da die aus der Kühlmittelzufuhr resultierenden Kräfte vorwiegend eine Verlagerung der Welle 2 senkrecht zur Achsrichtung WZ bewirken.

Allgemein betrachtet können zur Ermittlung der Verlagerungswerte VL, abhängig von Randbedingungen der Annäherung (Richtung der Annäherung, Geometrie des Werkstücks, Ausführung der Innenkühlungszufuhr, ...), jeweils geeignete Kombinationen von Positionswerten P1, P2, P3, P4, P5, P6 der Positionsaufnehmer 64, 65, 66, 67, 68, 69 ausgewählt werden.

Wie in Figur 5 dargestellt, kann die Annäherung des Werkzeugs 4 an das Werkstück 6 in drei Bereiche eingeteilt werden, einen Leerlaufbereich I, einen Annäherungsbereich II und einen Bearbeitungsbereich III. Die Annäherung erfolgt bei aktivierter Innenkühlungszufuhr.

Im Leerlaufbereich I (bis zu einer Position Z1, bzw. einem Zeitpunkt t1) wirkt sich die Kühlmittelzufuhr noch nicht aus, deshalb tritt keine, bzw. nur eine vernachlässigbar geringe, weitgehend konstante Verlagerung der Welle 2 auf.

Im Annäherungsbereich II (zwischen der Position Z1 und einer Position Z2, bzw. dem Zeitpunkt t1 und einem Zeitpunkt t2) kommt es zu einem Anstieg der Verlagerung der Welle 2, deren Ursache in einem Staudruck begründet ist, der beim Auftreffen, bzw. der Reflektion von Kühlmittel 14 vom Werkstück 6 entsteht. Die Kraft F, die hierbei auf das Werkzeug 4 wirkt, wird umso größer, je weiter sich das Werkzeug 4 an das Werkstück 6 annähert.

Im Bearbeitungsbereich III (ab der Position Z2, bzw. dem Zeitpunkt t2) kommt es schließlich zu einer Berührung zwischen dem Werkzeug 4 und dem Werkstück 6 und somit zu einer spanabhebenden Bearbeitung. Dabei überlagern sich die Kraft F und die bei der Bearbeitung des Werkstücks 6 auftretenden Kräfte, so dass der dargestellte Verlauf der Verlagerungswerte VL im Übergang zwischen dem Annäherungsbereich II und dem Bearbeitungsbereich III eine Sprungstelle aufweist. In anderen Worten ausgedrückt, bewirkt das Auftreffen des Werkzeugs 4 auf das Werkstück 6 einen sprunghaften Anstieg des Verlaufs der Verlagerungswerte VL.

Optional kann der Verlagerungsrechner 41 aus den Positionswerten P1, P2, P3 zusätzlich eine Winkelposition POS berechnen und an den Vergleicher 43 ausgeben, so dass neben dem Betrag auch die Richtung der Auslenkung der Welle 2 ausgewertet werden kann. Darüber hinaus kann vorgesehen sein, die Winkelposition POS über den Ausgangsdatenkanal 51 an das Steuergerät 100 auszugeben, so dass ggf. auf das Winkelmessgerät 5 verzichtet werden kann.

Die Verlagerungswerte VL sind dem Vergleicher 43 zugeführt. Er bildet durch Vergleich der vom Verlagerungsrechner 41 eintreffenden Verlagerungswerte VL mit einem Schwellenwert S ein Annäherungssignal AS, das angibt, ob der Schwellenwert S erreicht, bzw. überschritten wurde und gibt das Annäherungssignal AS über den Ausgangsdatenkanal 51 an das Steuergerät 100 aus.

Der Schwellenwert S ist nun so gewählt, dass er im Annäherungsbereich II erreicht, bzw. überschritten wird und zwar an einer Annäherungsposition ZA, an der sich das Werkzeug 4 bereits nahe am Werkstück 6 befindet, ohne dieses zu berühren, also bevor der Bearbeitungsbereich III erreicht wird. Der Schwellenwert S kann im Vergleicher 43 gespeichert sein oder dem Rechner 40 über den Befehlskanal 52 zugeführt werden.

Der Schwellenwert S kann in einem Testlauf ermittelt werden, bei dem alle drei Bereiche durchfahren werden. Da es hierbei zu einer spanabhebenden Bearbeitung kommt, wird als Werkstück 6 mit Vorteil ein Testwerkstück verwendet.

In einer bevorzugten Ausführungsform umfasst der Rechner 40 zur Bestimmung des Schwellenwertes S weiter einen Schwellenwertbestimmer 42. Diesem sind die Verlagerungswerte VL zugeführt, sowie ein Teststartbefehl TEST, der dem Rechner wiederum vom Steuergerät 100 über den Befehlskanal 52 zugeführt ist. Der Schwellenwertbestimmer 42 ist nun geeignet ausgestaltet, um aus dem Verlauf der Verlagerungswerte VL zu erkennen, ob sich das Werkzeug 4 im Leerlaufbereich I, im Annäherungsbereich II, oder im Bearbeitungsbereich III befindet. Insbesondere erkennt der Schwellenwertbestimmer 42 den Übergang (Sprung) vom Annäherungsbereich II zum Bearbeitungsbereich III und bestimmt, ausgehend von diesem Übergang, die Annäherungsposition ZA und den dazugehörigen Verlagerungswert VL als Schwellenwert S. Nachdem der Schwellenwert S bestimmt wurde, gibt der Schwellenwertbestimmer 42 über den Ausgangsdatenkanal 51 ein Teststopp-Signal STP an das Steuergerät 100 aus, das daraufhin die Bewegung des Werkzeugs 4 in Richtung des Werkstücks 6 (in der Bewegungsrichtung Z) und damit die spanabhebende Bearbeitung umgehend wieder beenden kann.

Die Abläufe im Rechner 40 werden von der Ablaufsteuerung 44 gesteuert, der über den Befehlskanal 52 der Startbefehl START, der Teststartbefehl TEST und ggf. Parameter PAR zugeführt sind. Die Steuerung erfolgt über Steuersignale STRG, die an die Funktionsmodule (Verlagerungsrechner 41, Schwellenwertbestimmer 42, Vergleicher 43) ausgegeben werden. Die Steuersignale STRG können auch Rückmeldungen der Funktionsmodule an die Ablaufsteuerung 44 umfassen.

Nach dem Eintreffen des Startbefehls START initiiert die Ablaufsteuerung 44 folgende Verfahrensschritte:
- Kontinuierliche Ermittlung von Verlagerungswerten VL aus Positionswerten P1, P2, P3, P4, P5, P6 in konstanten Zeitabständen im Verlagerungsrechner 41 und Ausgabe der Verlagerungswerte VL an den Vergleicher 43.
- Vergleich von Verlagerungswerten VL, die vom Verlagerungsrechner 41 eintreffen, mit dem Schwellenwert S im Vergleicher 43 und Bildung und Ausgabe des Annäherungssignales AS hieraus.

An Stelle des Startbefehls START kann beispielsweise auch das Einschalten einer Versorgungsspannung des Rechners 40 als Startbefehl interpretiert werden.

Steht noch kein Schwellenwert S zur Verfügung, dann kann vorab folgendes Verfahren zur Bestimmung von Schwellenwerten durchgeführt werden, das mit dem Teststartbefehl TEST gestartet wird:
- Kontinuierliche Ermittlung von Verlagerungswerten VL aus Positionswerten P1, P2, P3, P4, P5, P6 in konstanten Zeitabständen im Verlagerungsrechner 41 und Ausgabe der Verlagerungswerte VL an den Schwellenwertbestimmer 42.
- Bildung eines Schwellenwertes S der Verlagerung der Welle 2 im Schwellenwertbestimmer 42 durch Feststellen des Übergangs vom Annäherungsbereich II zum Bearbeitungsbereich III und Bestimmen, ausgehend von diesem Übergang, der Annäherungsposition ZA und des dazugehörigen Verlagerungswerts VL als Schwellenwert S. Ausgabe des Schwellenwertes S an den Vergleicher 43.

In einer vereinfachten Ausführungsform ist der Schwellenwert S ein konstanter Wert, der im Vergleicher 43 abgespeichert ist.

Die Bewegung der zur Ausführung der beschriebenen Verfahren benötigten Antriebe, die Rotation der Welle 2, die Aktivierung der Innenkühlungszufuhr, sowie die Interaktion mit dem Rechner 40 sind durch ein auf dem Steuergerät 100 lauffähigem Computerprogramm steuerbar.

Wie einleitend bereits beschrieben, ist die genaue Position eines neu zu bearbeitenden Werkstücks 6, das mittels Spannmitteln im Arbeitsbereich der Motorspindel 10 festgespannt wird, noch unbekannt. Bekannt sind lediglich die Grobposition und -ausrichtung des Werkstückes, die durch die Spannmittel vorgegeben sind. Ebenso bekannt sind die Abmessungen des Werkstückes 6 (Werkstück-Rohling). Vor der Bearbeitung der Werkstückkontur ist es notwendig, die exakte Position des Werkstücks 6 zu bestimmen. Ein bevorzugtes Verfahren wird im Folgenden anhand des in Figur 5 dargestellten Signaldiagramms in Verbindung mit dem in Figur 4 dargestellten Rechner 40 beschrieben:
In der Ausgangsposition befindet sich die Motorspindel 10 an einer Position im Leerlaufbereich I. Zu Beginn steuert das Steuergerät 100 den Spindelmotor 1 an, so dass dieser rotiert und aktiviert die Innenkühlungszufuhr. Anschließend signalisiert das Steuergerät 100 den für die gewünschte Bewegungsrichtung benötigten Antrieben 20X, 20Y, 20Z, 20A, 20B, die Motorspindel 10 auf das Werkstück 6 zuzubewegen und sendet den Startbefehl START an den Rechner 40. Die Bewegung erfolgt mit konstanter Vorschubgeschwindigkeit.

Der Rechner 40 führt nun das in Verbindung mit Figur 4 beschriebene Verfahren aus, d.h. der Verlagerungsrechner 41 ermittelt kontinuierlich Verlagerungswerte VL und der Vergleicher 43 vergleicht diese mit dem Schwellenwert S. Erreicht, bzw. überschreitet der Verlauf der Verlagerungswerte VL den Schwellenwert S, wird das Annäherungssignal AS, zum Steuergerät 100 übertragen.

Nach dem Eintreffen des Annäherungssignals AS speichert das Steuergerät 100 die aktuellen Positionswerte wenigstens der Positionsmesseinrichtungen 30X, 30Y, 30Z, 30A, 30B, die durch die Bewegung der Motorspindel durch die Antriebe 20X, 20Y, 20Z, 20A, 20B beeinflusst werden, als Position des Werkstückes 6 am gewählten Annäherungspunkt und stoppt die Antriebe, bzw. kehrt die Bewegungsrichtung um, so dass sich Werkzeug 4 und Werkstück 6 wieder voneinander entfernen bis sich die Motorspindel 10, bzw. das Werkzeug 4 wieder im Leerlaufbereich I befinden.

Dieses Verfahren wird in der Praxis wiederholt an verschiedenen Positionen des Werkstücks 6 durchgeführt, bis ausreichend viele Annäherungspunkte (Werkstückkoordinaten) vorliegen, um die exakte Position des Werkstücks 6, bzw. des Werkstück-Rohlings, zu kennen und die eigentliche Bearbeitung beginnen zu können.

Alternativ kann das Steuergerät 100 nach Erreichen eines Annäherungspunktes auch direkt zur Bearbeitung des Werkstücks 6 übergehen. Hierzu wird ggf. die Vorschubgeschwindigkeit angepasst, insbesondere verringert.

Stehen noch keine Schwellenwerte S zur Verfügung, beispielsweise zu Beginn einer Serienfertigung, dann kann das Steuergerät 100 diese unter Verwendung des Verfahrens zur Bestimmung von Schwellenwerten bestimmen.

Auch in diesem Fall befindet sich die Motorspindel 10 zu Beginn an einer Position im Leerlaufbereich I. Das Steuergerät 100 steuert den Spindelmotor 1 an, so dass dieser rotiert und aktiviert die Innenkühlungszufuhr. Anschließend signalisiert das Steuergerät 100 den für die gewünschte Bewegungsrichtung benötigten Antrieben 20X, 20Y, 20Z, 20A, 20B, die Motorspindel 10 auf das Werkstück 6 zuzubewegen und sendet den Teststartbefehl TEST an den Rechner 40.

Der Rechner 40 führt nun das in Verbindung mit Figur 4 beschriebene Verfahren zur Bestimmung von Schwellenwerten aus, d.h. der Verlagerungsrechner 41 ermittelt kontinuierlich Verlagerungswerte VL und führt sie dem Schwellenwertbestimmer 42 zu. Dieser ermittelt aus dem Verlauf der Verlagerungswerte VL den aktuellen Schwellenwert S und gibt ihn an den Vergleicher 43 aus. Anschließend übermittelt der Schwellenwertbestimmer 42 den Teststopp-Befehl STP an das Steuergerät 100.

Nach dem Eintreffen des Teststopp-Befehls STP stoppt das Steuergerät 100 die Antriebe, bzw. kehrt die Bewegungsrichtung um, so dass sich Werkzeug 4 und Werkstück 6 wieder voneinander entfernen bis sich die Motorspindel 10, bzw. das Werkzeug 4 wieder im Leerlaufbereich I befinden.

Auch dieses Verfahren wird wiederholt an verschiedenen Positionen des Werkstücks 6 durchgeführt, bis Schwellenwerte S für ausreichend viele Annäherungspunkte (Werkstückkoordinaten) vorliegen, um die exakte Position des Werkstücks 6, bzw. des Werkstück-Rohlings, bestimmen zu können.

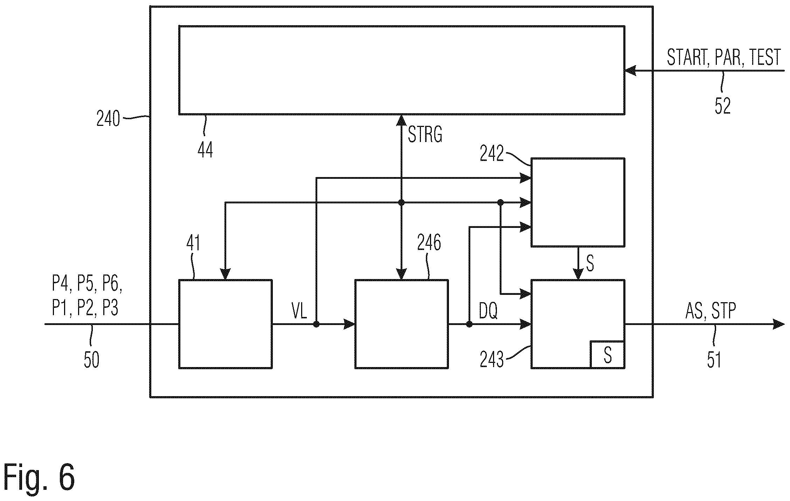

Figur 6 zeigt ein weiteres Ausführungsbeispiel eines Rechners 240. Er umfasst weiterhin den Verlagerungsrechner 41 und die Ablaufsteuerung 44. Abweichend zu den vorhergehenden Ausführungsformen weist der Rechner 240 nun einen Differenzierer 246 der den Verlauf der Verlagerungswerte VL differenziert, beispielsweise indem er Differenzenquotienten DQ aufeinanderfolgend eintreffender Verlagerungswerte VL und dem zeitlichen Abstand ihres Eintreffens beim Differenzierer 246 berechnet und an einen Vergleicher 243 ausgibt.

Der Vergleicher 243 vergleicht wiederum eintreffende Differenzenquotienten DQ mit einem geeigneten Schwellenwert S, der im Vergleicher 243 in einem hierfür vorgesehenen Speicher gespeichert ist. Überschreitet ein Differenzenquotient DQ den Schwellenwert S, so signalisiert dies der Vergleicher 243 durch Ausgabe des Annäherungssignals AS.

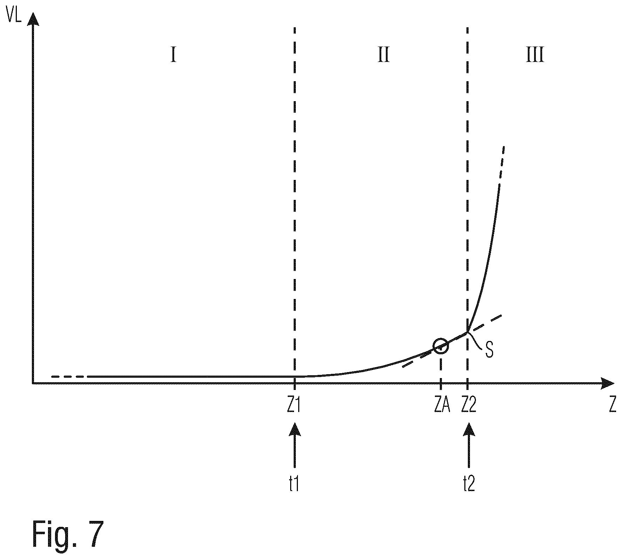

Figur 7 zeigt den Verlauf der Verlagerungswerte VL in Verbindung mit dem Schwellenwert S, der in diesem Beispiel eine Steigung des Verlaufs der Verlagerungswerte VL (bzw. einen Differenzenquotienten DQ) an der Annäherungsposition ZA angibt.

Der Rechner 240 kann, analog zum Rechner 40, einen Schwellenwertbestimmer 242 umfassen, um in Verbindung mit dem Steuergerät 100 Schwellenwerte S zu bestimmen. Hierfür sind dem Schwellenwertbestimmer 242 die Verlagerungswerte VL und/oder die Differenzenquotienten DQ zugeführt. Die von den Folgen von Verlagerungswerten VL, bzw. Differenzenquotienten DQ gebildeten Graphen weisen jeweils beim Übergang vom Annäherungsbereich II in den Bearbeitungsbereich III einen sprunghaften Anstieg auf, der vom Schwellenwertbestimmer 242 erkannt wird. Ausgehend von dieser Position wird die Steigung des Verlaufs der Verlagerungswerte VL bei der Annäherungsposition ZA (der Differenzenquotient) als Schwellenwert S bestimmt.

Die Steuerung der Ermittlung von Schwellenwerten S erfolgt wiederum über den Teststartbefehl TEST und das Teststopp-Signal STP.

Somit kann der Rechner 240 den Rechner 40 ersetzen.

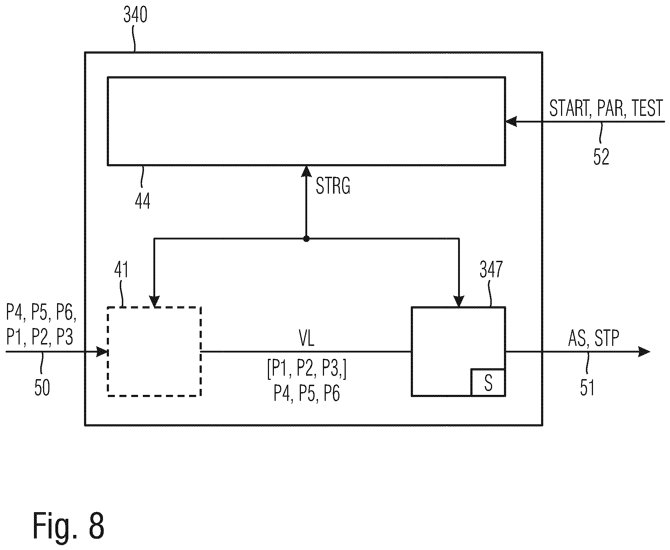

Figur 8 zeigt ein weiteres Ausführungsbeispiel eines Rechners 340. Er umfasst neben dem (in diesem Beispiel optionalen) Verlagerungsrechner 41 und der Ablaufsteuerung 44 einen Frequenzanalysator 347.

Der Frequenzanalysator 347 ist geeignet ausgestaltet, den Verlauf von Verlagerungswerten VL, die vom Verlagerungsrechner 41 eintreffen, im Frequenzbereich auszuwerten. Hier können mathematische Verfahren wie Fourier Analyse (FFT, DFT, Goertzel-Algorithmus, etc.), Ordnungsanalyse, oder adaptive Filterung zum Einsatz kommen.

Eine Auswertung der Verlagerungswerte VL im Frequenzbereich ist besonders vorteilhaft, wenn ein Werkzeug 4 zum Einsatz kommt, bei dem der Austritt des Kühlmittels 14 über entsprechende Öffnungen (Düsen) in der Mantelfläche des Werkzeugs 4 erfolgt, beispielsweise bei einem Fräser. Kommt es bei rotierender Welle 2 zu einer Annäherung des Werkzeugs 4 an das Werkstück 6, so bewirkt der Kühlmittelstrom jeder Düse eine umdrehungsperiodische Auslenkung der Welle 2. Durch gezielte Überwachung der spektralen Leistungsdichte von Frequenzbändern, die von der Drehzahl der Welle 2 und der Anzahl der Düsen abhängig ist, ist somit die Annäherung zwischen Werkzeug 4 und Werkstück 6 nachweisbar. Die Überwachung kann wiederum durch Vergleich mit geeigneten Schwellenwerten S erfolgen. Das Ergebnis der Auswertung kann wiederum als Annäherungssignal AS ausgegeben werden.

Für dieses Ausführungsbeispiel ist es vorteilhaft, wenn je Umdrehung der Welle 2 eine Vielzahl von Verlagerungswerten VL generiert werden, um die von den einzelnen Düsen verursachten Maxima der Auslenkung der Welle 2 sicher zu erfassen.

Optional kann in diesem Ausführungsbeispiel auch auf den Verlagerungsrechner 41 verzichtet werden, so dass die Positionswerte P1, P2, P3 direkt dem Frequenzanalysator 347 zugeführt sind. Dem liegt die Erkenntnis zugrunde, dass sich bei rotierender Welle 2 in Folgen von Positionswerten P1, P2, P3, P4, P5, P6 der Positionsaufnehmer 64, 65, 66, 67, 68, 69, die in zeitlich gleichen Abständen gemessen werden, Auslenkungen der Welle 2 in Form einer Variation der Positionsdifferenz aufeinanderfolgend gemessener Positionswerte auswirken. Diese Variation der Positionsdifferenz ist wiederum im Frequenzspektrum nachweisbar.

In jedem Fall kann der Frequenzanalysator 347 auch geeignet ausgestaltet sein, um, wiederum basierend auf dem Feststellen der Übergangsposition vom Annäherungsbereich II zum Bearbeitungsbereich III, Schwellenwerte S zu ermitteln.

Auch der Rechner 340 kann somit den Rechner 40 ersetzen.

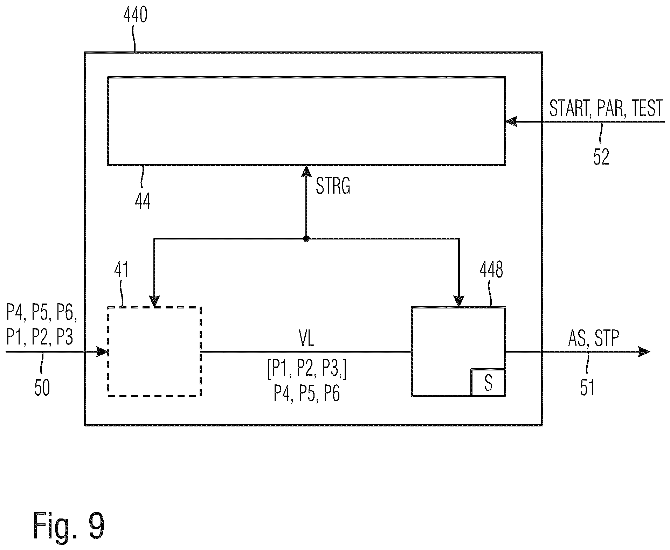

Figur 9 zeigt ein weiteres Ausführungsbeispiel eines Rechners 440. Er umfasst neben dem (optionalen) Verlagerungsrechner 41 und der Ablaufsteuerung 44 ein KI-Modul 448.

Das KI-Modul 448 ist geeignet ausgestaltet, um den Verlauf von Verlagerungswerten VL, die vom Verlagerungsrechner 41 eintreffen, mit Hilfe von Methoden der künstlichen Intelligenz, beispielsweise durch Vergleich mit vorab ermittelten Mustern ("machine teaching") auszuwerten und so die Annäherung des Werkzeugs 4 an das Werkstück 6 zu erkennen. Diese Muster entsprechen den Schwellenwerten S der vorhergehenden Beispiele und können im Zusammenspiel mit dem Steuergerät 100 in Testläufen ermittelt werden. Mit Vorteil ist das KI-Modul selbstlernend, so dass die Erkennung von Annäherungsvorgängen kontinuierlich verbessert wird.

In einer Variante dieses Ausführungsbeispiels kann auf den Verlagerungsrechner 41 verzichtet werden, so dass auch hier, wie im vorhergehenden Beispiel, die Positionswerte P1, P2, P3, P4, P5, P6 direkt dem KI-Modul 448 zugeführt sind und deren zeitlicher Verlauf ausgewertet wird.

Wird das Erreichen der Annäherungsposition ZA erkannt, wird dies wieder mit dem Annäherungssignal AS signalisiert.

Auch dieser Rechner 440 kann den Rechner 40 ersetzen.

Die vorliegende Erfindung ist nicht auf die beschriebenen Ausführungsbeispiele beschränkt, sondern kann von einem Fachmann im Rahmen der Ansprüche auch alternativ ausgeführt werden.

## Patentansprüche

1. Vorrichtung zur Feststellung einer Annäherung eines Werkzeugs (4) an ein Werkstück (6) in einer Werkzeugmaschine, bei der das Werkzeug (4) und das Werkstück (6) relativ zueinander bewegbar sind und das Werkzeug (4) oder das Werkstück (6) drehfest mit einer Welle (2) verbunden ist, wobei das Werkzeug (4) einen Kühlmittelkanal (16) aufweist, durch den ein Kühlmittel (14) einem Bearbeitungsbereich zuführbar ist, in dem die Bearbeitung des Werkstücks (6) durch das Werkzeug (4) stattfindet, umfassend eine Messanordnung (60) mit einer drehfest auf der Welle (2) angeordneten Messteilung (61) und wenigstens einen Positionsaufnehmer (64, 65, 66, 67, 68, 69), der in Bezug auf die Welle (2) feststehend angeordnet ist, sowie einen Rechner (40, 240, 340, 440), wobei
• der wenigstens eine Positionsaufnehmer (64, 65, 66, 67, 68, 69) geeignet ausgestaltet ist, die Messteilung (61) abzutasten und hieraus Positionswerte (P1, P2, P3, P4, P5, P6) zu generieren, die eine Position der Welle (2) angeben und
• die Positionswerte (P1, P2, P3, P4, P5, P6) dem Rechner (40, 240, 340, 440) zugeführt werden können, der Mittel umfasst, die durch Auswertung eines Verlaufs der Positionswerte (P1, P2, P3, P4, P5, P6) bei einer Annäherung des Werkzeugs (4) an das Werkstück (6) feststellen können, dass sich das Werkzeug (4) bezogen auf das Werkstück (6) in einem Annäherungsbereich (II) befindet, in dem eine Verlagerung der Welle (2) auftritt, die aus dem Staudruck des auf das Werkstück (6) auftreffenden Kühlmittelstroms resultiert und mittels eines Annäherungssignals (AS) signalisieren können, wenn das Werkzeug (4) bezogen auf das Werkstück (6) eine Annäherungsposition (ZA) erreicht, bei der sich das Werkzeug (4) nahe am Werkstück (6) befindet, ohne dieses zu berühren.

2. Vorrichtung nach Anspruch 1, wobei die Messteilung (61) eine erste Teilungsspur (62) aufweist, deren Codeelemente in Umfangsrichtung der Welle (2) angeordnet sind.

3. Vorrichtung nach Anspruch 2, wobei die Messteilung (61) weiter eine zweite Teilungsspur (62) aufweist, deren Codeelemente ringförmig um den Umfang der Welle (2) angeordnet sind.

4. Vorrichtung nach einem der vorhergehenden Ansprüche, wobei die Mittel im Rechner (40, 140, 240, 340, 440, 540) einen Verlagerungsrechner (41) umfassen, der aus den Positionswerten (P1, P2, P3, P4, P5, P6) Verlagerungswerte (VL) bestimmen kann, die eine Auslenkung der Welle (2) aus einer Ruhelage angeben.

5. Vorrichtung nach Anspruch 4, wobei die Mittel im Rechner (40, 240, 340, 440) weiter umfassen:
• einen Vergleicher (43), mit dem durch Vergleich von aktuell eintreffenden Verlagerungswerten (VL) mit einem Schwellenwert (S) das Erreichen der Annäherungsposition (ZA) feststellbar ist, oder/und
• einen Differenzierer (246), ausgestaltet zur Bildung des Differenzenquotienten (DQ) aufeinanderfolgend eintreffender Verlagerungswerte (VL) und einen Vergleicher (243) mit dem durch Vergleich der Differenzenquotienten (DQ) mit einem Schwellenwert (S) das Erreichen der Annäherungsposition (ZA) feststellbar ist, oder/und
• einen Frequenzanalysator (347), mit dem durch Auswertung des Verlaufs der Verlagerungswerte (VL) im Frequenzbereich das Erreichen der Annäherungsposition (ZA) feststellbar ist, oder/und
• ein KI-Modul (448), mit dem durch Auswertung des Verlaufs der Verlagerungswerte (VL) mit Methoden der künstlichen Intelligenz, insbesondere durch Mustererkennung, das Erreichen der Annäherungsposition (ZA) feststellbar ist.

6. Vorrichtung nach einem der Ansprüche 1 bis 4, wobei die Mittel im Rechner (340, 440)
• einen Frequenzanalysator (347), mit dem durch Auswertung des Verlaufs der Positionswerte (P1, P2, P3, P4, P5, P6) im Frequenzbereich das Erreichen der Annäherungsposition (ZA) feststellbar ist, oder/und
• ein KI-Modul (448), mit dem durch Auswertung des Verlaufs der Positionswerte (P1, P2, P3, P4, P5, P6) mit Methoden der künstlichen Intelligenz, insbesondere durch Mustererkennung, das Erreichen der Annäherungsposition (ZA) feststellbar ist,
umfassen.

7. Vorrichtung nach einem der vorhergehenden Ansprüche, wobei die Mittel im Rechner (40, 240) weiter einen Schwellenwertbestimmer (42, 242) umfassen, der bei Annäherung des Werkzeugs (4) an das Werkstück (6) einen Übergang vom Annäherungsbereich (II) zu einem Bearbeitungsbereich (III), in dem es zu einer spanabhebenden Bearbeitung des Werkstücks (6) kommt, erkennt und hieraus einen Schwellenwert (S) bestimmen kann.

8. Verfahren zur Feststellung einer Annäherung eines Werkzeugs (4) an ein Werkstück (6) in einer Werkzeugmaschine, bei der das Werkzeug (4) und das Werkstück (6) relativ zueinander bewegbar sind und das Werkzeug (4) oder das Werkstück (6) drehfest mit einer Welle (2) verbunden ist, wobei das Werkzeug (4) einen Kühlmittelkanal (16) aufweist, durch den ein Kühlmittel (14) einem Bearbeitungsbereich zuführbar ist, in dem die Bearbeitung des Werkstücks (6) durch das Werkzeug (4) stattfindet, und die Werkzeugmaschine eine Messanordnung (60) mit einer drehfest auf der Welle (2) angeordneten Messteilung (61) und wenigstens einen Positionsaufnehmer (64, 65, 66, 67, 68, 69), der in Bezug auf die Welle (2) feststehend angeordnet ist, sowie einen Rechner (40, 240, 340, 440) umfasst, wobei
• die Messteilung (61) von dem wenigstens einen Positionsaufnehmer (64, 65, 66, 67, 68, 69) abgetastet wird und hieraus Positionswerte (P1, P2, P3, P4, P5, P6) generiert werden, die eine Position der Welle (2) angeben und
• die Positionswerte (P1, P2, P3, P4, P5, P6) dem Rechner (40, 240, 340, 440) zugeführt sind, der Mittel umfasst, mit denen durch Auswertung eines Verlaufs der Positionswerte (P1, P2, P3, P4, P5, P6) bei einer Annäherung des Werkzeugs (4) an das Werkstück (6) festgestellt wird, dass sich das Werkzeug (4) bezogen auf das Werkstück (6) in einem Annäherungsbereich (II) befindet, in dem eine Verlagerung der Welle (2) auftritt, die aus dem Staudruck des auf das Werkstück (6) auftreffenden Kühlmittelstroms resultiert und die Mittel mittels eines Annäherungssignals (AS) signalisieren, wenn das Werkzeug (4) bezogen auf das Werkstück (6) eine Annäherungsposition (ZA) erreicht, bei der sich das Werkzeug (4) nahe am Werkstück (6) befindet, ohne dieses zu berühren.

9. Verfahren nach Anspruch 8, wobei die Mittel im Rechner (40, 140, 240, 340, 440, 540) einen Verlagerungsrechner (41) umfassen, mit dem aus den Positionswerten (P1, P2, P3, P4, P5, P6) Verlagerungswerte (VL) bestimmt werden, die eine Auslenkung der Welle (2) aus einer Ruhelage angeben.

10. Verfahren nach Anspruch 9, wobei die Mittel im Rechner (40, 240, 340, 440) weiter umfassen:
• einen Vergleicher (43), mit dem durch Vergleich von aktuell eintreffenden Verlagerungswerten (VL) mit einem Schwellenwert (S) das Erreichen der Annäherungsposition (ZA) festgestellt wird, oder/und
• einen Differenzierer (246), mit dem Differenzenquotienten (DQ) aufeinanderfolgend eintreffender Verlagerungswerte (VL) gebildet werden und einen Vergleicher (243) mit dem durch Vergleich der Differenzenquotienten (DQ) mit einem Schwellenwert (S) das Erreichen der Annäherungsposition (ZA) festgestellt wird, oder/und
• einen Frequenzanalysator (347), mit dem durch Auswertung des Verlaufs der Verlagerungswerte (VL) im Frequenzbereich das Erreichen der Annäherungsposition (ZA) festgestellt wird, oder/und
• ein KI-Modul (448), mit dem durch Auswertung des Verlaufs der Verlagerungswerte (VL) mit Methoden der künstlichen Intelligenz, insbesondere durch Mustererkennung, das Erreichen der Annäherungsposition (ZA) festgestellt wird.

11. Verfahren nach einem der Ansprüche 8 bis 9, wobei die Mittel im Rechner (340, 440)
• einen Frequenzanalysator (347), mit dem durch Auswertung des Verlaufs der Positionswerte (P1, P2, P3, P4, P5, P6) im Frequenzbereich das Erreichen der Annäherungsposition (ZA) festgestellt wird, oder/und
• ein KI-Modul (448), mit dem durch Auswertung des Verlaufs der Positionswerte (P1, P2, P3, P4, P5, P6) mit Methoden der künstlichen Intelligenz, insbesondere durch Mustererkennung, das Erreichen der Annäherungsposition (ZA) festgestellt wird,
umfassen.

12. Verfahren nach einem der Ansprüche 8 bis 11, wobei das Verfahren durch einen Startbefehl (START) gestartet wird, der dem Rechner (40, 240) über einen Befehlskanal (52) zugeführt wird.

13. Verfahren nach einem der Ansprüche 8 bis 12, wobei die Mittel im Rechner (40, 240) weiter einen Schwellenwertbestimmer (42, 242) umfassen, mit dem in einem Testlauf bei Annäherung des Werkzeugs (4) an das Werkstück (6) ein Übergang vom Annäherungsbereich (II) zu einem Bearbeitungsbereich (III), in dem es zu einer spanabhebenden Bearbeitung des Werkstücks (6) kommt, erkannt und hieraus ein Schwellenwert (S) bestimmt wird.

14. Verfahren nach Anspruch 13, wobei der Testlauf durch einen Teststartbefehl (TEST) gestartet wird, der dem Rechner (40, 240) über den Befehlskanal (52) zugeführt wird.

15. Werkzeugmaschine, ausgestattet mit einer Vorrichtung nach einem der Ansprüche 1 bis 7.

## Claims

1. Device for detecting when a tool (4) approaches a workpiece (6) in a machine tool in which the tool (4) and the workpiece (6) are movable relative to one another and the tool (4) or the workpiece (6) is connected non-rotatably to a shaft (2), wherein the tool (4) comprises a coolant channel (16) through which a coolant (14) is suppliable to a machining area in which the machining of the workpiece (6) by the tool (4) takes place, encompassing a measuring arrangement (60), having a measuring scale (61) that is arranged non-rotatably on the shaft (2), and at least one position sensor (64, 65, 66, 67, 68, 69) that is arranged statically in relation to the shaft (2), and also a computer (40, 240, 340, 440), wherein
• the at least one position sensor (64, 65, 66, 67, 68, 69) is suitably configured to scan the measuring scale (61) and to generate therefrom position values (P1, P2, P3, P4, P5, P6) that indicate a position of the shaft (2), and
• the position values (P1, P2, P3, P4, P5, P6) can be supplied to the computer (40, 240, 340, 440), which comprises means that, as a result of evaluation of a trend in the position values (P1, P2, P3, P4, P5, P6) when the tool (4) is approaching the workpiece (6), are able to detect that the tool (4) is in an approach area (II), with reference to the workpiece (6), in which a displacement of the shaft (2) occurs that results from the backpressure of the coolant stream impinging on the workpiece (6), and are able to use an approach signal (AS) to signal when the tool (4) reaches an approach position (ZA), with reference to the workpiece (6), in which the tool (4) is close to the workpiece (6) without touching said workpiece.

2. Device according to Claim 1, wherein the measuring scale (61) comprises a first division track (62), the code elements of which are arranged in the circumferential direction of the shaft (2).

3. Device according to Claim 2, wherein the measuring scale (61) further comprises a second division track (62), the code elements of which are arranged in a ring around the circumference of the shaft (2).

4. Device according to one of the preceding claims, wherein the means in the computer (40, 140, 240, 340, 440, 540) encompass a displacement computer (41) that is able to use the position values (P1, P2, P3, P4, P5, P6) to determine displacement values (VL) that indicate a deflection of the shaft (2) from a resting position.

5. Device according to Claim 4, wherein the means in the computer (40, 240, 340, 440) further encompass:
• a comparator (43) that, as a result of comparison of currently available displacement values (VL) with a threshold value (S), can be used to detect when the approach position (ZA) is reached, and/or
• a differentiator (246), configured to calculate the difference quotient (DQ) of successively available displacement values (VL), and a comparator (243) that, as a result of comparison of the difference quotients (DQ) with a threshold value (S), can be used to detect when the approach position (ZA) is reached, and/or
• a frequency analyser (347), which, as a result of evaluation of the trend in the displacement values (VL) in the frequency domain, can be used to detect when the approach position (ZA) is reached, and/or
• an AI module (448), which, as a result of evaluation of the trend in the displacement values (VL) using artificial intelligence methods, in particular using pattern recognition, can be used to detect when the approach position (ZA) is reached.

6. Device according to one of Claims 1 to 4, wherein the means in the computer (340, 440) encompass
• a frequency analyser (347), which, as a result of evaluation of the trend in the position values (P1, P2, P3, P4, P5, P6) in the frequency domain, can be used to detect when the approach position (ZA) is reached, and/or
• an AI module (448) that, as a result of evaluation of the trend in the position values (P1, P2, P3, P4, P5, P6) using artificial intelligence methods, in particular using pattern recognition, can be used to detect when the approach position (ZA) is reached.

7. Device according to one of the preceding claims, wherein the means in the computer (40, 240) further encompass a threshold value determiner (42, 242) that, when the tool (4) is approaching the workpiece (6), can identify a transition from the approach area (II) to a machining area (III), in which the workpiece (6) undergoes machining, and can determine a threshold value (S) therefrom.

8. Method for detecting when a tool (4) approaches a workpiece (6) in a machine tool in which the tool (4) and the workpiece (6) are movable relative to one another and the tool (4) or the workpiece (6) is connected non-rotatably to a shaft (2), wherein the tool (4) comprises a coolant channel (16) through which a coolant (14) is suppliable to a machining area in which the machining of the workpiece (6) by the tool (4) takes place, and the machine tool encompasses a measuring arrangement (60), having a measuring scale (61) that is arranged non-rotatably on the shaft (2), and at least one position sensor (64, 65, 66, 67, 68, 69) that is arranged statically in relation to the shaft (2), and also a computer (40, 240, 340, 440), wherein
• the measuring scale (61) is scanned by the at least one position sensor (64, 65, 66, 67, 68, 69) and position values (P1, P2, P3, P4, P5, P6) that indicate a position of the shaft (2) are generated therefrom, and
• the position values (P1, P2, P3, P4, P5, P6) are supplied to the computer (40, 240, 340, 440), which comprises means that, as a result of evaluation of a trend in the position values (P1, P2, P3, P4, P5, P6) when the tool (4) is approaching the workpiece (6), are used to detect that the tool (4) is in an approach area (II), with reference to the workpiece (6), in which a displacement of the shaft (2) occurs that results from the backpressure of the coolant stream impinging on the workpiece (6), and the means use an approach signal (AS) to signal when the tool (4) reaches an approach position (ZA), with reference to the workpiece (6), in which the tool (4) is close to the workpiece (6) without touching said workpiece.

9. Method according to Claim 8, wherein the means in the computer (40, 140, 240, 340, 440, 540) encompass a displacement computer (41) that is used to use the position values (P1, P2, P3, P4, P5, P6) to determine displacement values (VL) that indicate a deflection of the shaft (2) from a resting position.

10. Method according to Claim 9, wherein the means in the computer (40, 240, 340, 440) further encompass:
• a comparator (43) that, as a result of comparison of currently available displacement values (VL) with a threshold value (S), is used to detect when the approach position (ZA) is reached, and/or
• a differentiator (246), which is used to calculate difference quotients (DQ) of successively available displacement values (VL), and a comparator (243) that, as a result of comparison of the difference quotients (DQ) with a threshold value (S), is used to detect when the approach position (ZA) is reached, and/or
• a frequency analyser (347), which, as a result of evaluation of the trend in the displacement values (VL) in the frequency domain, is used to detect when the approach position (ZA) is reached, and/or
• an AI module (448), which, as a result of evaluation of the trend in the displacement values (VL) using artificial intelligence methods, in particular using pattern recognition, is used to detect when the approach position (ZA) is reached.

11. Method according to either of Claims 8 to 9, wherein the means in the computer (340, 440) encompass
• a frequency analyser (347), which, as a result of evaluation of the trend in the position values (P1, P2, P3, P4, P5, P6) in the frequency domain, are used to detect when the approach position (ZA) is reached, and/or
• an AI module (448) that, as a result of evaluation of the trend in the position values (P1, P2, P3, P4, P5, P6) using artificial intelligence methods, in particular using pattern recognition, is used to detect when the approach position (ZA) is reached.

12. Method according to one of Claims 8 to 11, wherein the method is started by a start command (START) that is supplied to the computer (40, 240) via a command channel (52).

13. Method according to one of Claims 8 to 12, wherein the means in the computer (40, 240) further encompass a threshold value determiner (42, 242) that is used in a test run when the tool (4) is approaching the workpiece (6) to identify a transition from the approach area (II) to a machining area (III), in which the workpiece (6) undergoes machining, and to determine a threshold value (S) therefrom.

14. Method according to Claim 13, wherein the test run is started by a test start command (TEST) that is supplied to the computer (40, 240) via the command channel (52).

15. Machine tool, equipped with a device according to one of Claims 1 to 7.

## Revendications

1. Dispositif de détection de l'approche d'un outil (4) par rapport à une pièce (6) dans une machine-outil, dispositif dans lequel l'outil (4) et la pièce (6) peuvent être déplacés l'un par rapport à l'autre et l'outil (4) ou la pièce (6) est relié solidairement en rotation à un arbre (2), l'outil (4) comportant un conduit d'agent de refroidissement (16) à travers lequel un agent de refroidissement (14) peut être amené à une zone de traitement dans laquelle le traitement de la pièce (6) est effectué par l'outil (4), ledit dispositif comprenant un ensemble de mesure (60) pourvu d'une graduation de mesure (61) disposée solidairement en rotation sur l'arbre (2) et au moins un capteur de position (64, 65, 66, 67, 68, 69) qui est disposé de manière fixe par rapport à l'arbre (2), ainsi qu'un calculateur (40, 240, 340, 440),
• l'au moins un capteur de position (64, 65, 66, 67, 68, 69) étant conçu de manière appropriée pour balayer la graduation de mesure (61) et générer à partir de là des valeurs de position (P1, P2, P3, P4, P5, P6), qui représentent une position de l'arbre (2) et
• les valeurs de position (P1, P2, P3, P4, P5, P6) pouvant être amenées au calculateur (40, 240, 340, 440), qui comprend des moyens qui peuvent déterminer, lorsque l'outil (4) s'approche de la pièce (6), en évaluant une évolution des valeurs de position (P1, P2, P3, P4, P5, P6), que l'outil (4) se trouve, par rapport à la pièce (6), dans une zone d'approche (II) dans laquelle se produit un déplacement de l'arbre (2), qui résulte de la pression dynamique du flux d'agent de refroidissement incident à la pièce (6) et qui peuvent signaler au moyen d'un signal d'approche (AS), si l'outil (4) atteint, par rapport à la pièce (6), une position d'approche (ZA) dans laquelle l'outil (4) est proche de la pièce (6) sans la toucher.

2. Dispositif selon la revendication 1, la graduation de mesure (61) comportant une première trace de graduation (62) dont les éléments de code sont disposés dans la direction circonférentielle de l'arbre (2).

3. Dispositif selon la revendication 2, la graduation de mesure (61) comportant en outre une deuxième trace de graduation (62) dont les éléments de code sont disposés annulairement autour de la circonférence de l'arbre (2).

4. Dispositif selon l'une des revendications précédentes, les moyens du calculateur (40, 140, 240, 340, 440, 540) comprenant un calculateur de déplacement (41) qui peut déterminer à partir des valeurs de position (P1, P2, P3, P4, P5, P6) des valeurs de déplacement (VL), qui indiquent une déviation de l'arbre (2) par rapport à une position de repos.

5. Dispositif selon la revendication 4, les moyens du calculateur (40, 240, 340, 440) comprennent en outre :
• un comparateur (43), qui permet de déterminer que la position d'approche (ZA) est atteinte en comparant les valeurs de déplacement (VL) en cours à une valeur seuil (S), ou/et
• un différenciateur (246), conçu pour former le quotient de différence (DQ) de valeurs de déplacement (VL) successives et un comparateur (243) qui permet de déterminer que la position d'approche (ZA) est atteinte en comparant le quotient de différence (DQ) à une valeur seuil (S), ou/et
• un analyseur de fréquence (347) qui permet de déterminer que la position d'approche (ZA) est atteinte en évaluant l'évolution des valeurs de déplacement (VL) dans la gamme de fréquences, ou/et
• un module KI (448) qui permet de déterminer que la position d'approche (ZA) est atteinte en évaluant l'évolution des valeurs de déplacement (VL) à l'aide de méthodes d'intelligence artificielle, en particulier en effectuant une reconnaissance de formes.

6. Dispositif selon l'une des revendications 1 à 4, les moyens du calculateur (340, 440) comprenant
• un analyseur de fréquence (347) qui permet de déterminer que la position d'approche (ZA) est atteinte en évaluant l'évolution des valeurs de position (P1, P2, P3, P4, P5, P6) dans la gamme de fréquences, ou/et
• un module KI (448) qui permet de déterminer que la position d'approche (ZA) est atteinte en évaluant l'évolution des valeurs de position (P1, P2, P3, P4, P5, P6) à l'aide de méthodes d'intelligence artificielle, notamment en effectuant une reconnaissance de formes.

7. Dispositif selon l'une des revendications précédentes, les moyens du calculateur (40, 240) comprenant en outre un déterminateur de valeur seuil (42, 242) qui, lorsque l'outil (4) s'approche de la pièce (6), détecte une transition de la zone d'approche (II) à une zone de traitement (III), dans laquelle la pièce (6) est soumise à un traitement par usinage et qui peut déterminer à partir de là une valeur seuil (S).

8. Procédé de détermination de l'approche d'un outil (4) par rapport à une pièce (6) dans une machine-outil dans laquelle l'outil (4) et la pièce (6) sont mobiles l'un par rapport à l'autre et l'outil (4) ou la pièce (6) est relié solidairement en rotation à un arbre (2), l'outil (4) comportant un conduit d'agent de refroidissement (16) à travers lequel un agent de refroidissement (14) peut être amené à une zone de traitement dans laquelle le traitement de la pièce (6) est effectué par l'outil (4), et la machine-outil comprenant un ensemble de mesure (60) pourvu d'une graduation de mesure (61) disposée solidairement en rotation sur l'arbre (2) et au moins un capteur de position (64, 65, 66, 67, 68, 69), qui est disposé de manière fixe sur l'arbre (2), et un calculateur (40, 240, 340, 440),
• la graduation de mesure (61) étant balayée par l'au moins un capteur de position (64, 65, 66, 67, 68, 69) et des valeurs de position (P1, P2, P3, P4, P5, P6), qui représentent une position de l'arbre (2), étant générées à partir de là et
• les valeurs de position (P1, P2, P3, P4, P5, P6) pouvant être amenées au calculateur (40, 240, 340, 440), qui comprend des moyens qui peuvent déterminer, lorsque l'outil (4) s'approche de la pièce (6), en évaluant une évolution des valeurs de position (P1, P2, P3, P4, P5, P6), que l'outil (4) se trouve, par rapport à la pièce (6), dans une zone d'approche (II) dans laquelle se produit un déplacement de l'arbre (2), qui résulte de la pression dynamique du flux d'agent de refroidissement incident à la pièce (6) et qui peuvent signaler au moyen d'un signal d'approche (AS), si l'outil (4) atteint, par rapport à la pièce (6), une position d'approche (ZA) dans laquelle l'outil (4) est proche de la pièce (6) sans la toucher.

9. Procédé selon la revendication 8, les moyens du calculateur (40, 140, 240, 340, 440, 540) comprenant un calculateur de déplacement (41) qui permet de déterminer à partir des valeurs de position (P1, P2, P3, P4, P5, P6) des valeurs de déplacement (VL), qui indiquent une déviation de l'arbre (2) par rapport à une position de repos.

10. Procédé selon la revendication 9, les moyens du calculateur (40, 240, 340, 440) comprennent en outre :
• un comparateur (43), qui permet de déterminer que la position d'approche (ZA) est atteinte en comparant les valeurs de déplacement (VL) en cours à une valeur seuil (S), ou/et
• un différenciateur (246), qui permet de former le quotient de différence (DQ) de valeurs de déplacement (VL) successives et un comparateur (243) qui permet de déterminer que la position d'approche (ZA) est atteinte en comparant le quotient de différence (DQ) à une valeur seuil (S), ou/et
• un analyseur de fréquence (347) qui permet de déterminer que la position d'approche (ZA) est atteinte en évaluant l'évolution des valeurs de déplacement (VL) dans la gamme de fréquences, ou/et
• un module KI (448) qui permet de déterminer que la position d'approche (ZA) est atteinte en évaluant l'évolution des valeurs de déplacement (VL) à l'aide de méthodes d'intelligence artificielle, en particulier en effectuant une reconnaissance de formes.

11. Procédé selon l'une des revendications 8 à 9, les moyens du calculateur (340, 440) comprenant
• un analyseur de fréquence (347) qui permet de déterminer que la position d'approche (ZA) est atteinte en évaluant l'évolution des valeurs de position (P1, P2, P3, P4, P5, P6) dans la gamme de fréquences, ou/et
• un module KI (448) qui permet de déterminer que la position d'approche (ZA) est atteinte en évaluant l'évolution des valeurs de position (P1, P2, P3, P4, P5, P6) à l'aide de méthodes d'intelligence artificielle, notamment en effectuant une reconnaissance de formes.

12. Procédé selon l'une des revendications 8 à 11, le procédé étant démarré par une instruction de démarrage (START) qui est fournie au calculateur (40, 240) par le biais d'un canal d'instruction (52).

13. Procédé selon l'une des revendications 8 à 12, les moyens du calculateur (40, 240) comprenant en outre un déterminateur de valeur seuil (42, 242) qui permet, lors d'un test effectué lorsque l'outil (4) s'approche de la pièce (6), de détecter une transition de la zone d'approche (II) à une zone de traitement (III), dans laquelle la pièce (6) est soumise à un traitement par usinage et de déterminer à partir de là une valeur seuil (S).

14. Procédé selon la revendication 13, le test étant démarré par une instruction de démarrage de test (TEST) qui est fournie au calculateur (40, 240) par le biais du canal d'instruction (52).

15. Machine-outil, équipée d'un dispositif selon l'une des revendications 1 à 7.
